# EUROPÄISCHE PATENTSCHRIFT

(11) **EP 1 754 893 B1**
(45) Veröffentlichungstag und Bekanntmachung des Hinweises auf die Patenterteilung: **27.02.2013**
(21) Anmeldenummer: 06119018.7
(22) Anmeldetag: 16.08.2006
(51) Int. Cl.: F16B 2/06, F16B 7/14

(54) **Klemmstück zum Klemmen eines vorzugsweise stangenförmigen Bauteiles**
Clamping element for clamping a bar element
Élément de serrage pour la fixation d'un élément en barre

(30) Priorität: 16.08.2005 DE 202005012886 U
(43) Veröffentlichungstag der Anmeldung: 21.02.2007
(73) Patentinhaber: Arning, Hans-Joachim, 32584 Löhne (DE)
(72) Erfinder: Arning, Hans-Joachim, 32584 Löhne (DE)
(74) Vertreter: Dantz, Jan Henning

(56) Entgegenhaltungen:
- EP-A1- 0 094 520
- AU-B2- 571 965
- US-A- 4 111 575
- US-A- 5 722 627

## Beschreibung

Die Erfindung betrifft ein Klemmstück zum Klemmen eines vorzugsweise stangenförmigen Bauteiles entsprechend dem Oberbegriff des Anspruchs 1.

Derartige Klemmstücke finden in unterschiedlichsten Anwendungsbereichen Verwendung. Ebenso sind sie in verschiedenen Ausführungsvarianten bekannt, beispielsweise als sogenannte Kreuz- oder Flanschklemmstücke. Ein gattungsgemäßes Klemmstück ist beispielsweise aus der DE 20 2005 013 777 U1 bekannt.

Als nächstliegender Stand der Technik wird US 4 111 575 angesehen, und offenbart ein Klemmstück mit den Merkmalen des Oberbegriffs des Anspruchs 1.

In das Klemmstück eingesetzte stangenförmige Bauteile, beispielsweise Rohre, werden durch die Verspannung der Klemmbacken gegeneinander reibschlüssig gehalten, wobei die Klemmbacken aus einer einseitig in Längsachsrichtung durchgehend geschlitzten Klemmhülse gebildet sind, und das Spannmittel, vorzugsweise eine Schraube, in seitlich an die Klemmbacken angeformte Laschen eingesetzt ist. Dabei ist eine Lasche mit einem Durchgangsloch und die andere Lasche mit einer Gewindebohrung versehen, in die die Schraube nach Durchtreten des Durchgangsloches unter Verspannung der beiden Klemmbacken eingedreht wird.

Der offene Klemmschlitz führt jedoch in einigen Anwendungsgebieten zu erheblichen Problemen, insbesondere hinsichtlich einzuhaltender Hygienevorschriften, da sich in diesem Klemmschlitz Rückstände ablagern können. Zu diesen Anwendungsbereichen zählen insbesondere die Lebensmittelindustrie allgemein und Molkereibetriebe im Besonderen.

Die offenen Klemmschlitze bilden bei der Reinigung der Systeme besondere Problemstellen, da deren Reinigung nur mit einem erheblichen arbeitsintensiven Aufwand zu realisieren ist.

Da solche Klemmstücke in den genannten Bereichen in einer Vielzahl zum Einsatz kommen, ergeben sich aus den genannten Reinigungsproblemen erhebliche Kostennachteile, die einem optimierten wirtschaftlichen Betrieb entgegenstehen.

Zwar ist schon versucht worden, den insoweit offenen Klemmschlitz abzudichten, jedoch ist dies nur mit einem hohen Fertigungsaufwand möglich und stellt überdies keine dauerhafte Lösung dar, zumal in dem Fall, wenn die Klemmverbindung gelöst werden muss, eine solche Dichtung zu erneuern ist.

Der Erfindung liegt daher die Aufgabe zugrunde, ein Klemmstück der gattungsgemäßen Art so weiterzuentwickeln, dass seine Verwendungsfähigkeit verbessert wird.

Diese Aufgabe wird durch ein Klemmstück mit den Merkmalen des Anspruchs 1 gelöst.

Ein in diesem Sinne ausgebildetes Klemmstück besitzt nun keine zu einer Reinigung schwer zugänglichen Bereiche mehr, insbesondere keinen gegenüber der Umgebung offenen Klemmschlitz.

Das außenseitig vollständig geschlossene, einstückige Gehäuse, in dem die Klemmhülse und damit die Klemmbacken sozusagen gekapselt einliegt, ist gegenüber der Umgebung weitgehend glattflächig ausgebildet und somit äußerst einfach zu reinigen. In jedem Fall sind keine schwer zugänglichen Bereiche mehr vorhanden, so dass sich eine bemerkenswerte Verbesserung gegenüber dem Stand der Technik ergibt.

Insbesondere bei dem genannten Einsatz in Bereichen, die besonderen Hygieneanforderungen unterliegen, stellt die Erfindung einen Handhabungsfortschritt dar, durch den sich eine hinsichtlich der Reinigungskosten optimierte Verwendung ergibt.

Nach einer vorteilhaften Weiterbildung der Erfindung ist der Übergangsbereich zwischen dem Gehäuse und dem stangenförmigen Bauteil mittels einer Dichtung, beispielsweise einer an sich bekannten Wellendichtung verschlossen, ebenso wie der Bereich, in dem die Schraube mit ihrem Kopf im oder am Gehäuse anliegt.

Ein weiterer Gedanke der Erfindung sieht vor, dass das Gehäuse um die Klemmhülse herum gegossen ist und zwar derart, dass eine Klemmbacke fest in der Gehäusewandung verankert ist, während die andere Klemmbacke relativ beweglich zur zugeordneten Gehäusewandung ist.

Beide Klemmbacken sind mit parallel zueinander verlaufenden Laschen versehen, zwischen denen der Klemmschlitz gebildet und in einem Ansatz des Gehäuses gelagert ist, wobei eine der Laschen ein Innengewinde aufweist, während die andere Lasche ebenso wie der Ansatz des Gehäuses in diesem Bereich als Durchgangsbohrung ausgebildet ist.

Die Klemmhülse kann beispielsweise einstückig mit dem Gehäuse gegossen sein, wobei sich dann das sogenannte Schmelzgießverfahren bzw. Wachsschmelzverfahren anbietet.

Weiter kann vorgesehen sein, dass die Klemmhülse als separates Teil in eine Gießform gesetzt und anschließend entsprechend der erfindungsgemäßen Vorgabe umgossen wird, wobei die Klemmhülse aus einem Material mit einem höheren Schmelzpunkt besteht als das das Gehäuse bildende Material. Hierzu bietet sich als Klemmhülse beispielsweise Messing oder Stahl, vorzugsweise rostfreier Stahl an, während das Gehäuse aus einer Aluminiumschmelze gebildet wird.

Um einen insoweit festen Verbund der einen Klemmbacke in der Wandung des Gehäuses zu erreichen, dessen lichtes Querschnittsabmaß im übrigen dem lichten Querschnittsabmaß der Klemmhülse entspricht, ist diese Klemmbacke mit Zacken oder Noppen versehen, die von dem Gehäusematerial während des Gießens formschlüssig ausgefüllt werden.

Die andere Klemmbacke hingegen soll, wie erwähnt, gegenüber dem Gehäuse und der fest stehenden Klemmbacke in gewissem Maße frei beweglich sein, um so eine Klemmung des eingesetzten Bauteiles zu ermöglichen, wozu die vorgefertigte Klemmhülse in dem Überdeckungsbereich der entsprechenden Klemmbacke mit dem Gehäuse mit einem Trennmittel versehen wird, durch das eine adhäsive Verbindung zwischen der Klemmbacke und dem Gehäuse verhindert wird.

Eine leichte radiale Bewegbarkeit der entsprechenden Klemmbacke wird außerdem dadurch erreicht, dass diese Klemmbacke im Querschnitt trapezförmig ausgebildet ist, wobei die kürzere Grundlinie dieses Trapezes in der Gehäusewandung liegt, die im übrigen in ihrer Form daran angepasst ist.

Prinzipiell kann das Klemmstück auch aus anderen als den genannten Materialien bestehen, beispielsweise das Gehäuse aus Stahl und die Klemmhülse aus Kunststoff.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: ein erfindungsgemäßes Klemmstück in einer geschnittenen Seitenansicht, gemäß der Linie I ― I in Figur 2
- Figur 2: eine gemäß der Linie II ― II in Figur 1 geschnittene Draufsicht auf das Klemmstück
- Figur 3: eine Einzelheit des Klemmstücks in einer Schnittdarstellung entsprechend der Linie III - III in Figur 2.

In den Figuren ist ein Klemmstück zum Klemmen eines vorzugsweise stangenförmigen Bauteils 9, im vorliegenden Ausführungsbeispiel eines Rundrohres dargestellt, mit zwei, das Bauteil 9 in Funktionsstellung weitgehend umschließenden Klemmbacken 10, 11, die aus einer einseitig in Längsachsrichtung durchgehend geschlitzten Klemmhülse 2 gebildet sind.

Dabei sind an die Klemmbacken 10, 11, nach außen sich erstreckende, radial angeordnete Laschen 13 angeformt, die abständig unter Bildung eines Klemmschlitzes 5 verlaufen, wobei eine Klemmbacke 10 eine Gewindebohrung 4 aufweist, während die andere Klemmbacke 11 mit einer Durchgangsbohrung 3 versehen ist, durch die eine Schraube 6 geführt und in die Gewindebohrung 4 eingedreht ist, so dass die Klemmbacke 10 radial bewegbar gegen das Bauteil 9 pressbar ist.

Erfindungsgemäß ist die Klemmhülse 2 außenseitig von einem geschlossenen Gehäuse 1 umhüllt, so dass die Klemmhülse 2 praktisch in das Gehäuse 1 eingebettet ist.

Zur Abdichtung des Übergangsbereiches zwischen dem Gehäuse 1 und dem Bauteil 9 sind Dichtungen 8 vorgesehen, ebenso wie eine Dichtung 14 im Eintrittsbereich der Schraube 6 in einen Ansatz 12 des Gehäuses 1, der die beiden Laschen 13 der Klemmhülse 2 umschließt und der in Fortsetzung der Durchgangsbohrung 3 der einen Lasche 13 ebenfalls eine Durchgangsbohrung aufweist, die durch die erwähnte Dichtung 14 verschlossen ist.

Die eine Klemmbacke 11 ist außenseitig mit Zacken 7 versehen, in die formschlüssig das durch Umgießen hergestellte Gehäuse 1 eingreift, so dass diese Klemmbacke 11 gegenüber dem Gehäuse 1 festgesetzt ist.

Demgegenüber ist zur Erzielung der Klemmwirkung, d.h. für eine radiale Bewegbarkeit der anderen Klemmbacke 10 im Anlagebereich mit der Wandung des Gehäuses 1 eine Trennschicht 16 vor dem Gießen aufgebracht, so dass das Material des Gehäuses 1 keine adhäsive Verbindung mit der Klemmbacke 10 eingeht.

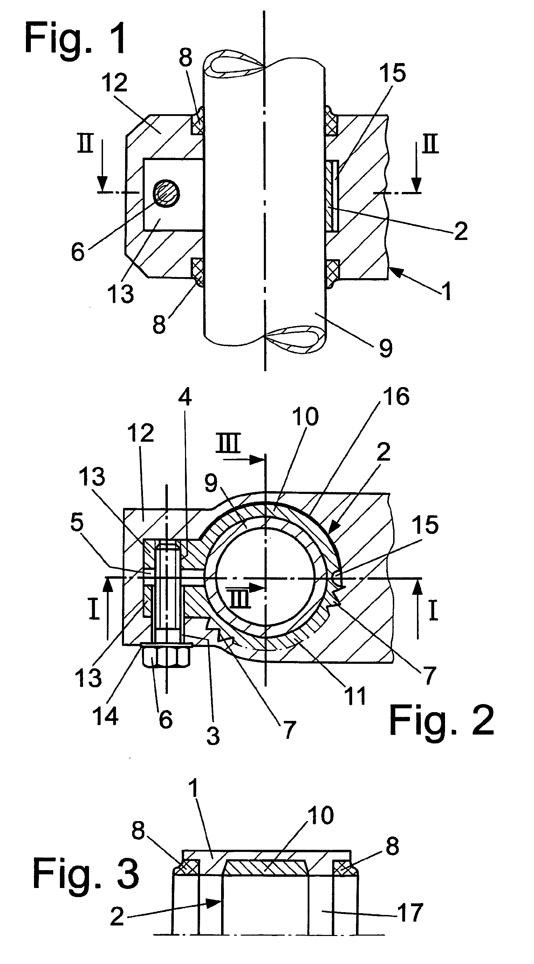

Zu einer leichten radialen Beweglichkeit der Klemmbacke 10 ist, wie die Figur 3 sehr deutlich zeigt, die Klemmbacke 10 im Querschnitt trapezförmig ausgebildet und liegt mit ihrer kürzeren Grundseite in der Wandung des Gehäuses 1, während die längere Grundseite, fluchtend mit einer Innenbohrung 17 des Gehäuses 1 verläuft.

In der Figur 2 ist weiter erkennbar, dass im Übergangsbereich zwischen den beiden Klemmbacken 10, 11 eine sich in Längsachsrichtung erstreckende Nut 15 in die Klemmhülse 2 eingebracht ist. Durch die erzielte Materialschwächung in diesem Bereich ist ebenfalls eine besonders leichte Bewegbarkeit des beweglichen Klemmschenkels 10 erreicht.

Im Ausführungsbeispiel ist in dem Klemmstück lediglich eine Klemmhülse 2 vorgesehen. Selbstverständlich können bei Bedarf auch mehrere Klemmhülsen 2 in dem Gehäuse 1 angeordnet sein und zwar fluchtend zur ersten Klemmhülse oder in gekreuzter Stellung, also um 90° versetzt dazu.

### Bezugszeichenliste

- 1: Gehäuse
- 2: Klemmhülse
- 3: Durchgangsbohrung
- 4: Gewindebohrung
- 5: Klemmschlitz
- 6: Schraube
- 7: Zacke
- 8: Dichtung
- 9: Bauteil
- 10: Klemmbacke
- 11: Klemmbacke
- 12: Ansatz
- 13: Lasche
- 14: Dichtung
- 15: Nut
- 16: Trennschicht
- 17: Innenbohrung

## Patentansprüche

1. Klemmstück zum Klemmen eines vorzugsweise stangenförmigen Bauteiles (9) mit mindestens zwei, das Bauteil in Funktionsstellung weitgehend umschließenden, aus einer einseitig in Längsachsrichtung durchgehend geschlitzten Klemmhülse (2) gebildeten Klemmbacken (10,11), die über ein Spannmittel gegeneinander bewegbar sind, **dadurch gekennzeichnet, dass** die Klemmhülse (2) außenseitig von einem geschlossenen, einstückigen Gussgehäuse (1) umhüllt ist, durch das das Spannmittel geführt ist und das eine Innenbohrung (17) zur Durchführung des Bauteiles (9) aufweist, die außenseitig des Gussgehäuses (1) mit einer umlaufenden Dichtung (8) zur dichtenden Anlage am Bauteil (9) versehen ist.

2. Klemmstück nach Anspruch 1, **dadurch gekennzeichnet, dass** das Gehäuse (1) ein Aluminiumgussgehäuse ist.

3. Klemmstück nach einem der vorhergehenden Ansprüche, **dadurch gekennzeichnet, dass** das Gehäuse (1) im Übergangsbereich zu dem Bauteil (9) mit einer Dichtung (8) versehen ist.

4. Klemmstück nach einem der vorhergehenden Ansprüche, **dadurch gekennzeichnet, dass** bei zweiteiliger Ausbildung eine Klemmbacke (11) der Klemmhülse (2) mit der zugeordneten Wandung des Gehäuses (1) verbunden ist, während die zweite Klemmbacke (10) lösbar an der Wandung des Gehäuses (1) anliegt.

5. Klemmstück nach Anspruch 4, **dadurch gekennzeichnet, dass** die bewegliche Klemmbacke (10) im Querschnitt trapezförmig ausgebildet ist, wobei die kürzere Grundlinie in der Wandung des Gehäuses (1) einliegt.

6. Klemmstück nach einem der vorhergehenden Ansprüche, **dadurch gekennzeichnet, dass** die Klemmhülse (2) im Übergangsbereich von der fest stehenden Klemmbacke (11) zur beweglichen Klemmbacke (10) mit einer sich in Längsachsrichtung erstreckenden Nut (15) versehen ist.

7. Klemmstück nach einem der vorhergehenden Ansprüche, **dadurch gekennzeichnet, dass** an die Klemmbacken (10, 11) sich radial erstreckende Laschen (13) angeformt sind, die unter Bildung eines Klemmschlitzes (5) abständig zueinander verlaufen.

8. Klemmstück nach Anspruch 7, **dadurch gekennzeichnet, dass** die Lasche (13) der beweglichen Klemmbacke (10) mit einer Gewindebohrung (4) versehen ist, während die Lasche (13) der fest stehenden Klemmbacke (11) ein Durchgangsloch (3) aufweist.

9. Klemmstück nach Anspruch 7 oder 8, **dadurch gekennzeichnet, dass** die Laschen (13) von einem Ansatz (12) des Gehäuses (1) umhüllt sind.

10. Klemmstück nach Anspruch 9, **dadurch gekennzeichnet, dass** der Ansatz (12) eine Durchgangsbohrung (3) aufweist, die in Fortsetzung der Durchgangsbohrung der Lasche (13) der Klemmbacke (11) verläuft.

11. Klemmstück nach Anspruch 1 oder 8, **dadurch gekennzeichnet, dass** als Spannmittel eine Schraube (6) durch die Durchgangsbohrung (3) geführt und in die Gewindebohrung (4) eingedreht ist, wobei ein Kopf der Schraube (6) gegenüber dem Gehäuse (1) durch eine Dichtung (14) abgedichtet ist.

12. Klemmstück nach einem der vorhergehenden Ansprüche, **dadurch gekennzeichnet, dass** eine Innenbohrung (17) des Gehäuses (1) fluchtend mit der Innenwandung der Klemmhülse (2) verläuft.

13. Verfahren zur Herstellung eines Klemmstückes nach einem oder mehreren der Ansprüche 1 oder 2, **dadurch gekennzeichnet, dass** das Gehäuse (1) und die Klemmhülse (2) im Schmelzgießverfahren, vorzugsweise im Wachsschmelzverfahren hergestellt werden.

14. Verfahren zur Herstellung eines Klemmstückes nach einem oder mehreren der Ansprüche 1 oder 2, **dadurch gekennzeichnet, dass** die Klemmhülse (2) als separates Teil hergestellt wird und einen höheren Schmelzpunkt aufweist als das Material des Gehäuses 1.

15. Verfahren zur Herstellung eines Klemmstückes nach Anspruch 13 oder 14, **dadurch gekennzeichnet, dass** in die fest stehende Klemmbacke (11) nach Anspruch 6 Formschlussmittel, vorzugsweise Zacken (7) eingebracht werden, durch die beim Gießen des Gehäuses (1) ein Formschluss damit hergestellt wird.

16. Verfahren zur Herstellung eines Klemmstückes nach Anspruch 13 oder 14, **dadurch gekennzeichnet, dass** vor dem Gießen des Gehäuses (1) die bewegliche Klemmbacke (10) nach Anspruch 6 im Überdeckungsbereich mit dem Gehäuse (1) mit einer Trennschicht (16) versehen wird.

## Claims

1. Clamping piece for clamping a preferably rod-shaped component (9) with at least two clamping jaws (10, 11) which largely enclose the component in the functional position, are formed from a clamping sleeve (2) which is slotted continuously on one side in the longitudinal axial direction, and can be moved with respect to one another via a clamping means, **characterized in that** the clamping sleeve (2) is enclosed on the outer side by a closed, single-piece cast housing (1), by which the clamping means is guided and which has an inner hole (17) for passing the component (9) through, which inner hole (17) is provided on the outer side of the cast housing (1) with a circumferential seal (8) for bearing against the component (9) in a sealing manner.

2. Clamping piece according to Claim 1, **characterized in that** the housing (1) is a cast aluminium housing.

3. Clamping piece according to one of the preceding claims, **characterized in that** the housing (1) is provided with a seal (8) in the transition region to the component (9).

4. Clamping piece according to one of the preceding claims, **characterized in that**, in the case of a two-piece configuration, a clamping jaw (11) of the clamping sleeve (2) is connected to the associated wall of the housing (1), whereas the second clamping jaw (10) bears releasably against the wall of the housing (1).

5. Clamping piece according to Claim4, **characterized in that** the movable clamping jaw (10) is of trapezoidal configuration in cross section, the shorter base line fitting in the wall of the housing (1).

6. Clamping piece according to one of the preceding claims, **characterized in that** the clamping sleeve (2) is provided with a groove (15) which extends in the longitudinal axial direction in the transition region from the stationary clamping jaw (11) to the movable clamping jaw (10).

7. Clamping piece according to one of the preceding claims, **characterized in that** radially extending tabs (13) are formed integrally onto the clamping jaws (10, 11) which tabs (13) extend at a spacing from one another with the formation of a clamping slot (5).

8. Clamping piece according to Claim 7, **characterized in that** the tab (13) of the movable clamping jaw (10) is provided with a threaded hole (4), whereas the tab (13) of the stationary clamping jaw (11) has a through hole (3).

9. Clamping piece according to Claim 7 or 8, **characterized in that** the tabs (13) are enclosed by a projection (12) of the housing (1).

10. Clamping piece according to Claim 9, **characterized in that** the projection (12) has a through hole (3) which extends in continuation of the through hole of the tab (13) of the clamping jaw (11).

11. Clamping piece according to Claim 1 or 8, **characterized in that** a screw (6) is guided as clamping means through the through hole (3) and is screwed into the threaded hole (4), a head of the screw (6) being sealed with respect to the housing (1) by a seal (14).

12. Clamping piece according to one of the preceding claims, **characterized in that** an inner hole (17) of the housing (1) runs flush with the inner wall of the clamping sleeve (2).

13. Method for producing a clamping piece according to one or more of Claims 1 or 2, **characterized in that** the housing (1) and the clamping sleeve (2) are produced using the fusion casting process, preferably using the lost-wax casting process.

14. Method for producing a clamping piece according to one or more of Claims 1 or 2, **characterized in that** the clamping sleeve (2) is produced as a separate part and has a higher melting point than the material of the housing 1.

15. Method for producing a clamping piece according to Claim 13 or 14, **characterized in that** positively locking means, preferably teeth (7), are made in the stationary clamping jaw (11) according to Claim 6, by way of which teeth (7) a positively locking connection is produced with the housing (1) during the casting of the latter.

16. Method for producing a clamping piece according to Claim 13 or 14, **characterized in that**, before the casting of the housing (1), the movable clamping jaw (10) according to Claim 6 is provided with a release layer (16) in the overlap region with the housing (1).

## Revendications

1. Pièce de serrage servant à serrer un élément (9) de préférence en forme de barre comportant au moins deux mâchoires de serrage (10, 11) entourant largement l'élément en position fonctionnelle, formées à partir d'une douille de serrage (2) fendue en continu d'un côté dans la direction de l'axe longitudinal, lesquelles mâchoires de serrage peuvent être déplacées l'une par rapport à l'autre par l'intermédiaire d'un moyen de tension, **caractérisée en ce que** la douille de serrage (2) est enveloppée côté extérieur par un boîtier coulé (1) fermé d'un seul tenant, à travers lequel est guidé le moyen de tension et qui présente un filetage intérieur (17) servant à réaliser l'élément (9), lequel filetage intérieur est pourvu côté extérieur du carter coulé (1) d'un joint d'étanchéité (8) périphérique destiné à venir en appui sur l'élément (9).

2. Pièce de serrage selon la revendication 1, **caractérisée en ce que** le boîtier (1) est un boîtier coulé en aluminium.

3. Pièce de serrage selon l'une quelconque des revendications précédentes, **caractérisée en ce que** le boîtier (1) est pourvu dans la zone de transition en direction de l'élément (9) d'un joint d'étanchéité (8).

4. Pièce de serrage selon l'une quelconque des revendications précédentes, **caractérisée en ce qu'**aux fins de la réalisation en deux parties, une mâchoire de serrage (11) de la douille de serrage (2) est reliée à la paroi associée du boîtier (1), tandis que la deuxième mâchoire de serrage (10) repose de manière amovible contre la paroi du boîtier (1).

5. Pièce de serrage selon la revendication 4, **caractérisée en ce que** la mâchoire de serrage mobile (10) est réalisée de manière à présenter une forme trapézoïdale dans la section transversale, sachant que la ligne de base la plus courte repose dans la paroi du boîtier (1).

6. Pièce de serrage selon l'une quelconque des revendications précédentes, **caractérisée en ce que** la douille de serrage (2) est pourvue dans la zone de transition de la mâchoire de serrage immobile (11) à la mâchoire de serrage mobile (10) d'une rainure (15) s'étendant dans la direction de l'axe longitudinal.

7. Pièce de serrage selon l'une quelconque des revendications précédentes, **caractérisée en ce que** sont formées au niveau des mâchoires de serrage (10, 11) des brides (13) s'étendant radialement, lesquelles s'étendent de manière espacée les unes par rapport aux autres en formant une fente de serrage (5).

8. Pièce de serrage selon la revendication 7, **caractérisée en ce que** la bride (13) de la mâchoire de serrage mobile (10) est pourvue d'un alésage fileté (4), tandis que la bride (13) de la mâchoire de serrage immobile (11) présente un trou de passage (3).

9. Pièce de serrage selon la revendication 7 ou 8, **caractérisée en ce que** les brides (13) sont enveloppées d'un appendice (12) du boîtier (1).

10. Pièce de serrage selon la revendication 9, **caractérisée en ce que** l'appendice (12) présente un alésage de passage (3), qui s'étend dans le prolongement de l'alésage de passage de la bride (13) de la mâchoire de serrage (11).

11. Pièce de serrage selon la revendication 1 ou 8, **caractérisée en ce qu'**une vis (6) est guidée en tant que moyen de tension à travers l'alésage de passage (3) et est posée dans l'alésage fileté (4), sachant qu'une tête de la vis (6) est étanchéifiée par rapport au boîtier (1) par un joint d'étanchéité (14).

12. Pièce de serrage selon l'une quelconque des revendications précédentes, **caractérisée en ce qu'**un alésage intérieur (17) du boîtier (1) s'étend de manière alignée avec la paroi intérieure de la douille de serrage (2).

13. Procédé de fabrication d'une pièce de serrage selon l'une quelconque ou plusieurs des revendications 1 ou 2, **caractérisé en ce que** le boîtier (1) et la douille de serrage (2) sont fabriqués lors d'un procédé de coulée de métal en fusion, de préférence lors d'un procédé de coulée à la cire perdue.

14. Procédé de fabrication d'une pièce de serrage selon l'une quelconque ou plusieurs des revendications 1 ou 2, **caractérisé en ce que** la douille de serrage (2) est fabriquée comme une pièce séparée et présente un point de fusion plus élevé que le matériau du boîtier (1).

15. Procédé de fabrication d'une pièce de serrage selon la revendication 13 ou 14, **caractérisé en ce que** sont placés dans la mâchoire de serrage immobile (11) selon la revendication 6 des moyens à complémentarité de forme, de préférence des pointes (7), grâce auxquels un assemblage par complémentarité de forme est ainsi fabriqué lors de la coulée du boîtier (1).

16. Procédé de fabrication d'une pièce de serrage selon la revendication 13 ou 14, **caractérisé en ce qu'**avant la coulée du boîtier (1), la mâchoire de serrage mobile (10) selon la revendication 6 est pourvue dans la zone de recouvrement avec le boîtier (1) d'une couche de séparation (16).
